# EUROPEAN PATENT APPLICATION

(11) **EP 2 770 758 A1**
(43) Date of publication of application: **27.08.2014**
(21) Application number: 13305200.1
(22) Date of filing: 22.02.2013
(51) Int. Cl.: H04W 4/02, H04L 27/00

(54) **Method and device for estimating speed, or speed class, of a user mobile communication device in a wireless communication network**

(71) Applicant: ALCATEL LUCENT, 92100 Boulogne-Billancourt (FR)
(72) Inventor: Capdevielle, Véronique, 91620 NOZAY (FR); Lahbabi, Naila, 91620 NOZAY (FR); Feki, Afef, 91620 NOZAY (FR)
(74) Representative: 2SPL Patentanwälte PartG mbB

(57) **Abstract**

A method and system for estimating speed, or speed class, of a user mobile communication device in a wireless communication network are provided. Various embodiments provides acquiring (301) a signal, named original signal (Ri), exchanged between said mobile communication device and a wireless access point of the wireless communication network. Acquiring (301) step may be followed by denoising (302) said original signal (Ri) by deleting the fast fading component of said original signal (Ri) to generate a denoised signal (Si), and then subtraction (303) of said denoised signal (Si) from said original signal (Ri) to generate a residual original signal (RESi), for decomposing (304) said residual original signal (RESi) with a wavelet decomposition function. Speed, or speed class, of the user mobile communication device may then be estimated in function of the result of said residual original signal wavelet decomposition.

## Description

### TECHNICAL FIELD

The present invention relates to wireless communication networks, and more particularly to user speed estimation in wireless communication networks.

### BACKGROUND

This section introduces aspects that may help facilitate a better understanding of the invention. Accordingly, the statements of this section are to be read in this light and are not to be understood as admissions about what is prior art or what is not prior art.

Estimating speed of a user mobile communication device through a mobile communication network, also named wireless access network, may be useful for improving mobility and radio resource managements.

Indeed, regarding mobility management, handover rate is directly linked to speed since the higher is the speed, the higher is handover frequency, thus the risk of call drop.

The analytical framework entitled *"*Spatial Queuing for analysis, design and dimensioning of Picocell networks with mobile users", Performance evaluation, August 2011, from V. Kavitha, S. Ramanath and E. Altman, incorporated by reference herein, demonstrates the increase in handover losses with the user speed and the optimal cell size increase with speed. Based on said demonstration, a solution to manage speed dependent mobility in metro cells networks has been proposed in the document entitled *"*Cell partitioning for High Speed Users", from V. Capdevielle, S. Ramanath, E. Altman and R. Roullet, incorporated by reference herein. Said solution consists in virtually adjusting the cell size through optimal power tuning depending on speed.

Furthermore, advanced simulations studies such as *"*Investigating Mobile Motion Prediction in Supporting Seamless Handover for High Speed Mobile Node", Proceedings of the International Conference on Computer and Communication Engineering 2008, from Naimah Yaakob, Farhat Anwar, Zeldi Suryady, Aisha Hassan Abdalla, incorporated by reference herein, show the impact of handover parameters, in particular offsets, hysteresis, timers, and filtering coefficients, on the handover performances upon the speed of the user.

In the field of resource management, the most suitable scheduling scheme, either frequency selective or diverse, actually depends on the speed of the user mobile communication device. Frequency selective scheduling shall be preferred at low speeds, while at high speeds, it is better to exploit frequency diversity, thus frequency diverse scheduling.

These examples highlight the need of estimating the speed of user mobile communication devices to optimize the radio resource management and to reduce the risk of call drop.

The document entitled *"*Wavelet analysis for velocity characterization in mobile communication networks", VTC Spring IEEE (2006), from Salah-Eddine Elayoubi, Afef Ben Hadj Alaya-Feki, Emmanuelle Villebrun, and Benoît Fourestié, incorporated by reference herein, proposes to use wavelet multiresolution analysis (MRA) on measured radio signals to discriminate between three different speed classes of user's mobile communication devices, namely immobile, pedestrian and incar.

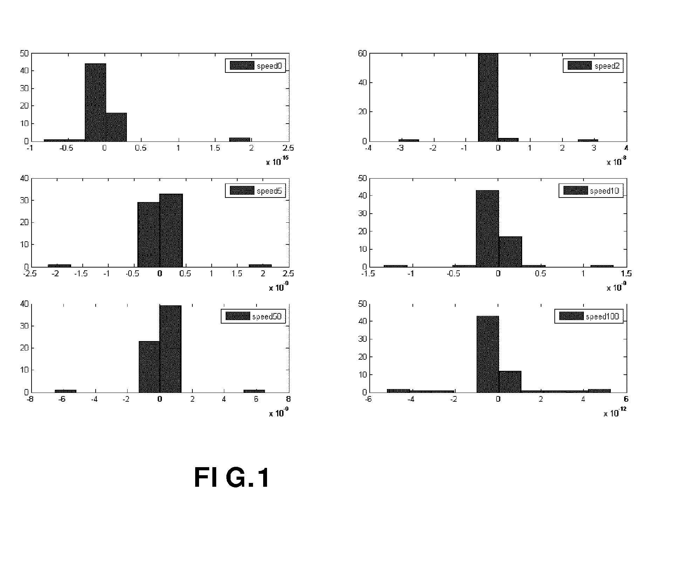

According to this document, for a given resolution level of the wavelet multiresolution analysis, the dispersion of the details component resulting from a wavelet decomposition of a radio signal exchanged between a user mobile communication device and a wireless access point is expected to be influenced by the user speed: low dispersion for low speed and high dispersion for higher speeds. However, simulations performed on Long Term Evolution (LTE) network measurements, with Reference Signal Received Power (RSRP) samples, show that medium and high speed are hardly discriminated after such MRA, even considering high resolution levels. Histograms of the wavelet decomposition of RSRP for different speeds, noted speed0 to speed100 and corresponding respectively to speed 0, 2, 5, 10, 50 and 100 kmph, resulting from said simulation, are reported in Figure 1 and reveal weak difference between intermediate speeds.

Needed then, is a manner of performing more accurate estimation of the speed, or speed class, of a user mobile communication device.

### SUMMARY

In order to address the shortcomings of the present state of the art, various embodiments provide a method for estimating speed, or speed class, of a user mobile communication device in a wireless communication network, said method comprising the steps of :
- acquiring a signal, named original signal, exchanged between said user mobile communication device and a wireless access point of the wireless communication network,
- denoising said original signal for smoothing the original signal, by deleting the fast fading component of said original signal to generate a denoised signal;
- subtracting said denoised signal from said original signal to generate a residual original signal,
- decomposing said residual original signal with a wavelet decomposition function,
- estimating said speed, or speed class, of the user mobile communication device in function of the result of said residual original signal wavelet decomposition.

Such embodiments enable accurate estimation of the speed, or speed class, of a user in a wireless access network relying on at least a radio signal exchanged between user mobile communication and a mobile access point, including for instance standards, real time measurements.

The use of wavelet decomposition enable to dynamically adapt the length of the observation window to the speed of the user device through which said radio signal is exchanged. It is a major benefit, compared to other solutions which require an accurate, a priori knowledge of the observation window size, whereas said window size is speed dependent. Furthermore, wavelet decomposition or transformation is computationally efficient.

Finally, processing said residual original signal with wavelet decomposition enables to discriminate close speed classes, not only very low and very high. This is not the case with direct wavelets decomposition on measurements signals, even considering high resolution orders.

Thanks to a more accurate estimation of the user's speed or the user's speed class that derives from such embodiments, handover configuration parameters may thus be dynamically and more accurately adapted to the user's speed to maintain continuity of service.

According to another aspect, said denoising step includes decomposing said original signal with a wavelet decomposition function.

Said denoising step may also include omitting the detail coefficients, resulting from wavelet decomposition of said original signal, that are lower than a predefined threshold value, and reconstructing a signal corresponding to said denoised signal with an inverse wavelet transformation function of the detail coefficients remaining after thresholding.

According to various embodiments, said decomposition of said residual original signal is performed at a level of resolution inferior to the level of resolution used for denoising the original signal. In various embodiments, the level of resolution for wavelet decomposition of the residual signal is reduced. In practice, typical values are inferior or equal to 3.

In various embodiments, the wavelet decomposition function used for denoising step is different from the wavelet decomposition function used for residual original signal decomposition step. Alternatively, the wavelet decomposition function for the denoising step and the wavelet decomposition function applied to the residual signal may be the same.

Said original signal may comprise power level measurement data. According to various embodiments, said speed estimating step is performed in function of the dispersion of the detail coefficients obtained from said residual original signal wavelet decomposition.

Said speed estimating step may include:
- for each of a plurality of preset values intervals, counting the detail coefficients whose values are included in said values interval so as to obtain the distribution of said detail coefficients,
- applying to said distribution of detail coefficients, conditional tests to estimate speed, or speed class, related to the user mobile communication device.

According to one aspect, said estimating step includes building a database with the steps of :
for each of a plurality of signals, named reference signals, exchanged between user mobile communication device(s) and at least one wireless access point, said user mobile communication device(s) moving at different known speeds,
denoising said reference signal in the same way as said original signal and generating a residual reference signal by subtracting denoised reference signal from said reference signal, said residual reference signal being decomposed in detail coefficients with the same wavelet decomposition function as the one to be used for decomposing said residual original signal, and
for each of a plurality of preset values intervals, counting the detail coefficients whose values are included in said values interval so as to obtain, for each reference signal to which a known speed, or speed class, is attached, the distribution, named reference distribution, of said detail coefficients of said reference signal.

According to another point, said speed estimating step includes:
- comparing the distribution of the detail coefficients derived from the wavelet decomposition of the residual original signal, with the reference distributions of detail coefficients included in the reference database,
- determining the distribution(s) of detail coefficients included in the reference database that is or are the most similar to the distribution of detail coefficients derived from the wavelet decomposition of the residual original signal, and
- associating the known speed, or class speed, of said determined reference distribution(s) to the user mobile communication device whose speed, or class speed, has to be estimated.

Thanks to such classification based on the fact that users with close speeds are proven to have similar properties of wavelets transformation results, a database including predefined speeds, or class speeds, and associated dispersion of detail coefficients may be built and speed, or class speed, of a user mobile communication device may be estimated more accurately based on such built database.

Such embodiments enable the user speeds classification with a high impact on major access network functions to manage resources and mobility.

Various embodiments also concern a system for estimating speed, or speed class, of a user mobile communication device in a wireless communication network, said system comprising means configured to execute a method as detailed above.

Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

### BRIEF DESCRIPTION OF THE DRAWINGS

Some embodiments of apparatus and/or methods in accordance with embodiments of the present invention are now described, by way of example only, and with reference to the accompanying drawings, in which:
Figure 1 show histograms of the wavelet decomposition of RSRP for different speeds, noted speed0 to speed100 and corresponding respectively to speed 0, 2, 5, 10, 50 and 100 kmph, issued from a method known from the state of the art;
Figure 2 is a schematic diagram illustrating the general method of wavelet decomposition applied to a signal
Figure 3 is a flow diagram illustrating a method for estimating speed or speed class of a user device according to an embodiment of the invention;
Figure 4 shows an original signal including noises and the corresponding denoised signal according to an embodiment of the invention;
Figure 5 show histograms of the wavelet decomposition of radio signals for different speeds, issued from an embodiment of the invention,
Figure 6 is a flow diagram illustrating a method for estimating speed or speed class of a user device according to an embodiment of the invention using coarse classification;
Figure 7 is a flow diagram illustrating a method for estimating speed or speed class of a user device according to an embodiment of the invention using accurate classification.

### DETAILED DESCRIPTION

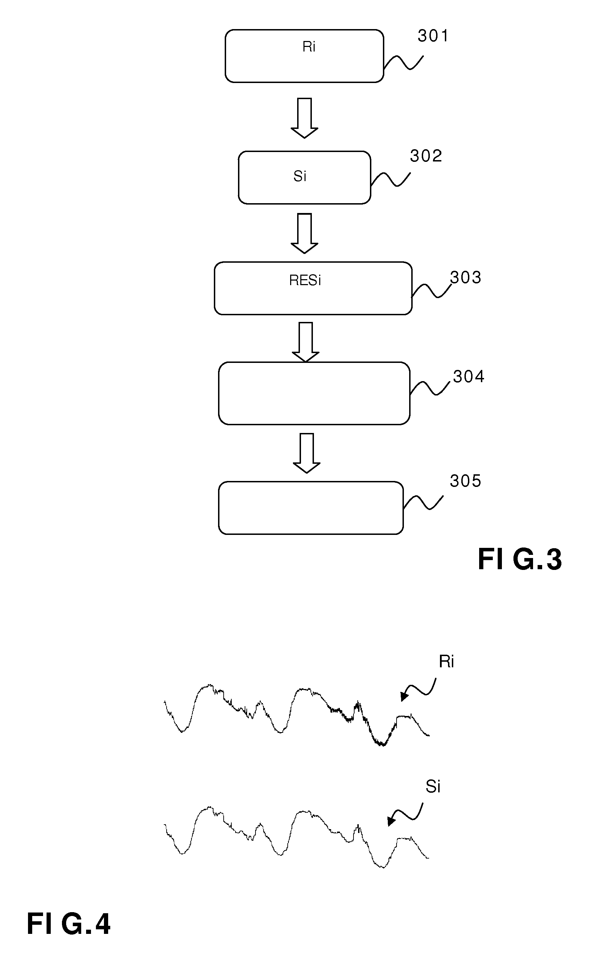

Figures 3 to 7 and the following description depict specific exemplary embodiments of the invention to teach those skilled in the art how to make and use embodiments of the invention. For the purpose of teaching inventive principles, some conventional aspects of embodiments have been simplified or omitted. Those skilled in the art will appreciate variations from these embodiments that fall within the scope of the invention. Those skilled in the art will appreciate that the features described below can be combined in various ways to form multiple variations of the invention. As a result, the invention is not limited to the specific embodiments described below, but only by the claims and their equivalents.

Wavelet multiresolution analysis is known to one skilled in the art and only the aspects relevant to the present embodiments are discussed. Detailed explanation concerning wavelet multiresolution analysis may be found on publications such as the Ph.D thesis entitled "Multiresolution representation and wavelet" from S. Mallat, University of Pennsylvania, 1989, incorporated by reference herein.

When processing a signal with a wavelet multiresolution analysis (MRA), said signal is viewed at various levels of resolution.

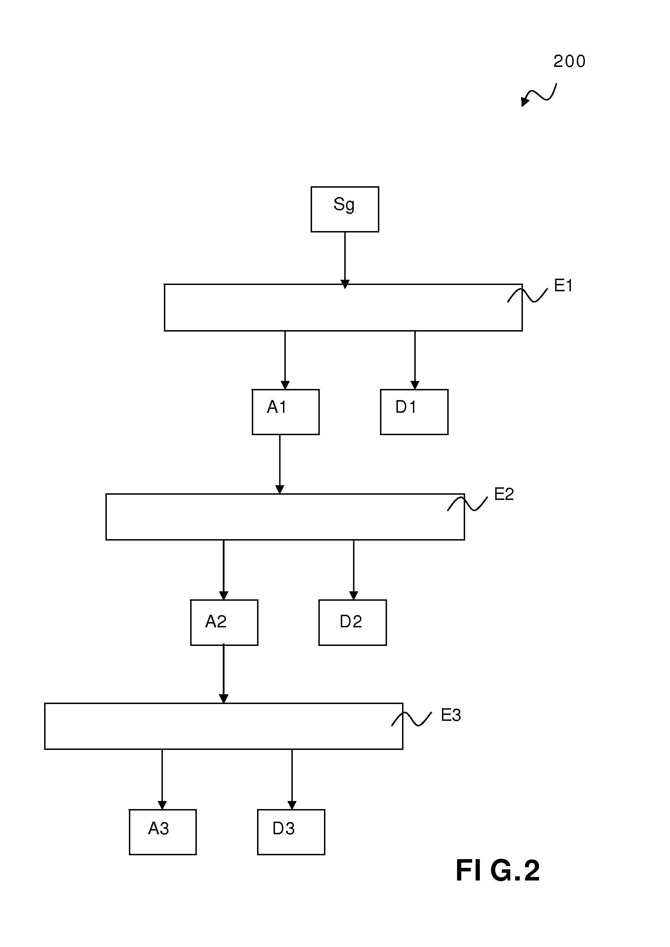

Figure 2 illustrates how an original signal Sg is decomposed at different levels of resolution I, with I= 1 ,2,3, in scaling (approximation) coefficients Al and wavelet (details) coefficients DI.

To this end, a wavelet decomposition unit 200 may perform, with a first filter stage E1, decomposition of an input signal Sg into a detail coefficient D1, as if an high-pass filter were applied to said input signal Sg, and into an approximation A1 coefficient as if a low-pass filter were applied to said input signal Sg. The wavelet decomposition unit 200 may comprise further filter stages E2, E3, wherein each filter stage E2, E3 takes as input the approximation coefficient A1, A2 of the previous filter stage E1, E2 output.

The number of filter stages successively applied for wavelet decomposition of the signal corresponds to the resolution level of the wavelet decomposition. In other words, the wavelet transformation, also known as the wavelet decomposition, of a signal Sg is the single approximation A1 coefficient representing the overall average of the data values corresponding to the signal, followed by the detail DI coefficients in the order of increasing resolution I.

Coefficients at high resolutions show the fine structure of the signal, whereas, while those at low resolutions provide an overview of the coarse features of the signal.

Thus, broadly speaking, the wavelet decomposition of a function consists of a coarse overall approximation coefficient together with detail coefficients that influence the function at various scales. In fact, the wavelet transformation at different resolutions corresponds to a variety of window lengths and, hence, eliminates the necessity of adapting the duration of a single temporal observation window.

As explained before, it is desirable to accurately estimate speed, or speed class, of a user mobile communication device for resources and mobility management issues.

Accordingly, various exemplary embodiments propose a method for accurately estimating the speed, or speed class, of a user mobile communication device in a wireless communication network, such as a UMTS or LTE network. Thus speed class of the user may be considered as a speed values interval including the user mobile communication device speed value.

In the particular embodiment illustrated at figure 3, the flowchart relates to a method that comprises the steps of acquiring 301 a signal, named original signal Ri, exchanged between the user mobile communication device and a wireless access point, such as a base station, of the wireless communication network.

Said original signal Ri may comprise measurement data samples either performed by the user mobile communication device and reported to the wireless access point or performed by said wireless access point itself in the reverse side. In various embodiments, said measurements are real time measurements.

Said measurements may be done in a native way. In particular, measurement data may be standardized in the considered Radio Access Technology which may be for instance UMTS or LTE. According to various embodiments, said original signal Ri comprises power level measurement data. Received power level measurement is a type of metric that includes the attenuations undergone by the propagated signal from wireless access point to the user mobile device communication, or in the reverse direction, which are highly linked to the external environment as well as the user speed. Said original signal may thus be for instance a vector of Reference Signal Received Power (RSRP) measurement in the context of a LTE network. Obviously, measurement data set included in the original signal may be different from RSRP measurement. Furthermore, measurements can be performed indifferently on the downlink or uplink.

Said original signal may be considered as a data set. Following acquisition step 301, original signal Ri is denoised at step 302. Denoising said original signal Ri comprises deleting the fast fading component of said original signal Ri to generate a denoised signal Si. Fast fading component of a signal corresponds to fast variations in amplitude and phase of the signal. Variations are considered as fast when the coherence time of the channel is small with respect to the period of use. Coherence time is the time required for the magnitude of the signal to become uncorrelated from its prior value..

According to various embodiments, said denoising step includes decomposing the original signal using a discrete wavelet decomposition function at a given level of resolution. As an example of practical settings, said wavelet decomposition function may be a Coiflet family function up to level of resolution 6.

Next, detail coefficients resulting from said wavelet decomposition are thresholded. Thresholding detail coefficients means omitting the detail coefficients that are lower than a particular threshold. Subsequently, a denoised signal is reconstructed by inverse wavelet transformation of the coefficients after thresholding.

An example of an original signal Ri and corresponding denoised signal Si are reported at figure 4.

Details on the denoising procedure, including the automatic determination of thresholds, can be found in the publication : Donoho, D.L. (1995), "De-noising by soft-thresholding," IEEE, Trans. on Inf. Theory, 41, 3, pp. 613-62, incorporated by reference herein. Alternatively, other denoising methods may be used for denoising said original signal.

Denoising step 302 is followed by subtraction 303 of said denoised signal Si from said original signal Ri to generate a residual original signal RESi which is representative of the fast fading component of the original signal.

Said residual original signal RESi is decomposed at step 304 with a discrete wavelet decomposition function at a low level of resolution. As an example of practical settings, said wavelet decomposition function may be a Daubechies family function up to level of resolution 1.

In many embodiments, said decomposition 304 of said residual original signal RESi is performed at a level of resolution inferior to the level of resolution used for denoising the original signal Ri.

As discussed hereafter, analysis of the result of said residual original signal wavelet decomposition enables estimating 305 of the speed class, or speed, of the user mobile communication device in function of the result of said residual original signal wavelet decomposition.

As explained above, the residual data set relative to fast fading component carries speed dependent information. In particular, spreading of detail coefficients amplitudes after wavelet decomposition of the residual original signal increases with speed.

According to various embodiments, an histogram of said detail coefficients, issued from the residual original signal wavelet decomposition, is generated. Said histogram comprises in x-axis values preset subintervals of detail coefficient values and in y-axis the quantity or percentile of detail coefficients whose values are included in a preset subinterval among the whole values of detail coefficients obtained through the residual original signal RESi wavelet decomposition. In other word, said histogram can be generated by counting the number of detail coefficients whose values fall in each preset subinterval.

Preset subintervals may be defined by division of a range, constituted of extreme values of the obtained detail coefficients, for instance [-0,05 ; 0,05] with a predefined division step, for instance 0,001.

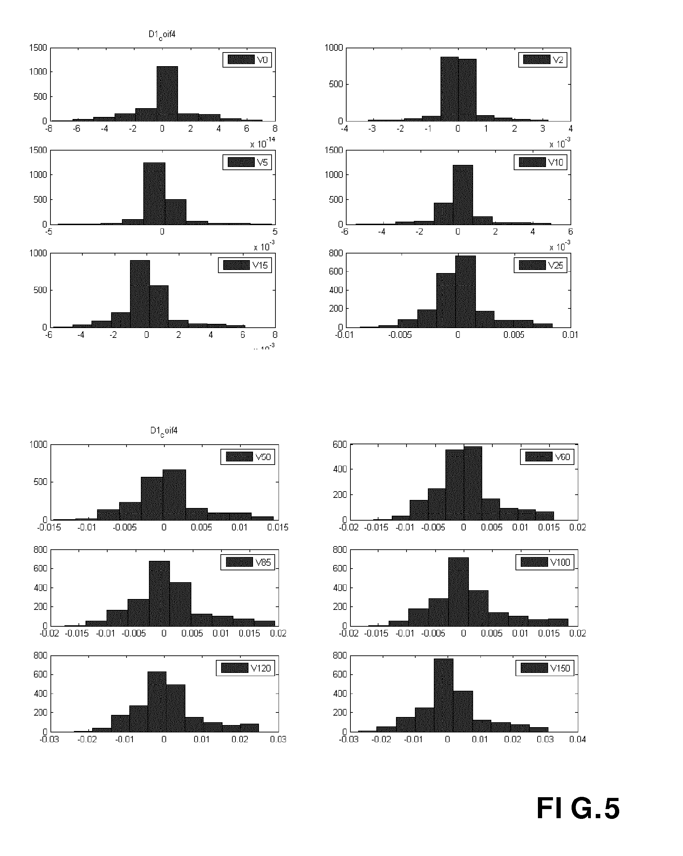

For example, histograms of detail coefficients resulting from wavelet decomposition at scale order 1 of the residual original signals RESi derived from original signals to which are associated different speeds, noted V0 to V150 and corresponding to speeds from 0 to 150 kmph, are reported at figure 5. These histograms have been obtained by simulation on Reference Signal Received Power samples for different speeds in a LTE network.

It can be observed that dispersion of these histograms significantly increases with speed. These histograms may be exploited by a classification procedure to discriminate the users' speeds between different speed class.

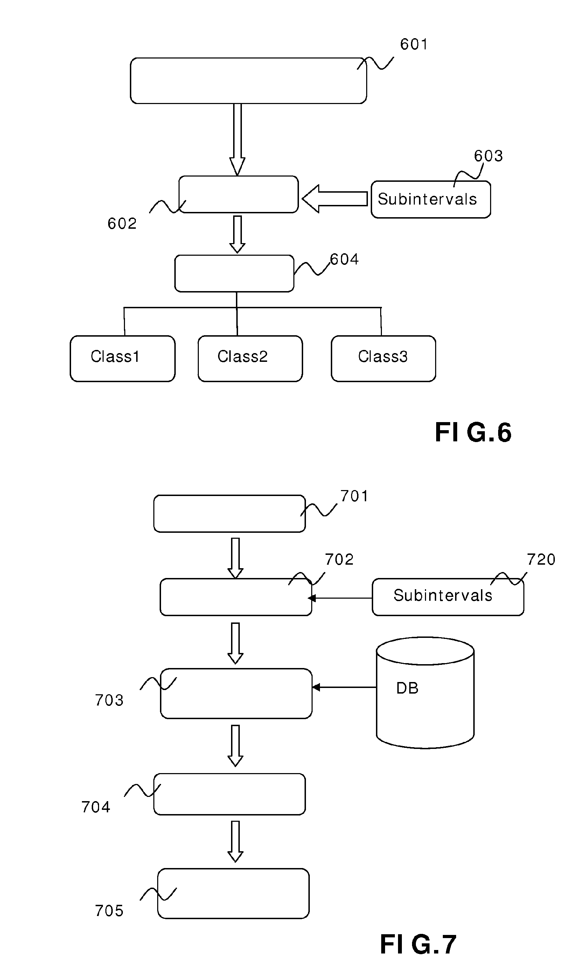

According to various embodiments, a coarse classification is described hereafter. With reference to figure 6, a residual original signal has been wavelet decomposed at step 601 and related detail coefficients have been used for generating an histogram 602 according to predefined subintervals 603 of detail coefficient values. Said residual original signal is derived from an original signal related to a user device whose speed has to be estimated.

Distribution, in particular distribution shape, of said detail coefficients related to said histogram is processed with conditional tests. Said conditional tests are based on experimentally threshold values and on subintervals of detail coefficients and percentile of detail coefficients in corresponding subintervals to associate to said detail coefficients distribution a predefined speed class.

According to various embodiments of coarse classification, the speed class of the user mobile communication device is estimated at step 604 among three speed classes in function of the dispersion of the detail coefficients resulting from said residual original signal wavelet decomposition. Said three classes may be, for instance, a first, named immobile, corresponding to a speed near 0 kmph, a second, named pedestrian, corresponding to a speed in the order of 1-10 kmph, and a third, named incar, corresponding to a speed superior to 10 kmph.

Thus coarse classification aims at estimating the speed class: either immobile (eg: speed=0 kmph), pedestrian-like (eg: between 0 and 10 kmph) or vehicular (eg: > 10kmph). This coarse classification basically relies on the dependency between distribution of details coefficients and speed. For users with very low mobility scheme, the values (details amplitudes obtained by the previous steps) are concentrated around zero while for higher mobility schemes, the details are spread over larger values.

To this end, histogram values are compared with fixed, experimentally set-up, thresholds to determine the corresponding speed class. If the histogram is concentrated on zero, then the speed class is immobile Class1. Otherwise, depending on the spreading of the detail coefficients, the speed class may be either Class2 (eg: Pedestrian) or Class3 (eg. vehicular).

Example of Practical settings may comprise the following conditional tests :
- If more than 99% of detail coefficient values fall in [-0.001 ; 0.001] then the speed class is 'immobile' ;
- If less than 99% and more than 75% of detail coefficient values fall in [-0.001 ; 0.001], then the speed class is 'pedestrian';
- Otherwise the speed class is "vehicular".

For a more accurate classification, the obtained detail coefficients distribution may be compared to a database. Said database may be built off line. It can be built by the wireless access point, during a learning phase or it can result from extensive learning phases by different wireless access point and profiling upon the radio environment, either urban, dense urban or rural for example. Alternatively, said database may be built by any device connected to said communication network.

Said database may be built in the following way. For each of a plurality of signals, named reference signals, exchanged between user communication device(s) and wireless access network(s), with said user communication device(s) moving at different known speeds, each reference signal is acquired and denoised in the same way as explained above for the original signal related to the user device whose speed has to be estimated. Similarly, a residual reference signal is generated by subtracting denoised reference signal from said reference signal, said residual reference signal being decomposed in detail coefficients with the same wavelet decomposition function as the one used for decomposing the residual original signal related to the user device whose speed has to be estimated. Furthermore, for each of a plurality of preset subintervals, said detail coefficients whose values are included in said preset subinterval are counted so as to obtain, for each reference signal to which a known speed value is attached, the distribution, named reference distribution, of said detail coefficients of said reference signal.

Thus it is obtained a database DB including N elements, N being an integer. Each DB element includes a vector, noted respectively DB1, .., DBN and a related reference speed. Each component of a vector of the database DB corresponds to the number of detail coefficients for a preset subinterval. In other words, the database is made of histograms values per reference speed.

Similarly, according to various embodiments and with reference of figure 7, for each subinterval of a plurality of preset subintervals 720 of a preset range, the number of detail coefficients issued from the wavelet decomposition at step 701 of the residual original signal derived from the original signal, whose values are included in said subinterval, are computed at step 702 so as to obtain a vector H whose each component corresponds to a number of detail coefficient for a preset subinterval.

The euclidian distance between vector H and each vector DB1,..., DBN may thus be computed at step 703 to obtain a new vector K = K1,.., KN, whose components correspond to the ordered distances of vector H to vectors DB1 ,.., DBN.

According to vector K, the closest vector(s) of DB from H is (are) identified at step 704. Then the speed, or speed class, corresponding to the original signal may be derived at step 705 from the reference speed, or speed class, attached to said identified closest vector(s) of the database DB from vector H.

As a result, such accurate classification enables to have more accurate estimation of the user's speed among a high number of classes, not limited to immobile, median speeds or very high.

According to various embodiments, said method for estimating the speed class of a user mobile communication device in a wireless communication network may be executed partially or totally by any system or group of system included or connected to said wireless communication network.

Note that, in some embodiments of the methods described above, other steps may be added without departing from the spirit of the invention.

A person skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital storage media. The embodiments are also intended to cover computers programmed to perform said steps of methods described herein.

Although multiple embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

## Claims

1. A method for estimating speed, or speed class, of a user mobile communication device in a wireless communication network, said method comprising the steps of :
- acquiring (301) a signal, named original signal (Ri), exchanged between said user mobile communication device and a wireless access point of the wireless communication network,
- denoising (302) said original signal (Ri) for smoothing the original signal by deleting the fast fading component of said original signal (Ri) to generate a denoised signal (Si);
- subtracting (303) said denoised signal (Si) from said original signal (Ri) to generate a residual original signal (RESi),
- decomposing (304) said residual original signal (RESi) with a wavelet decomposition function,
- estimating (305) said speed, or speed class, of the user mobile communication device in function of the result of said residual original signal wavelet decomposition.

2. The method of claim 1, wherein said denoising (302) step includes decomposing said original signal (Ri) with a wavelet decomposition function.

3. The method of claim 2, wherein said denoising (302) step also includes om itting the detail coefficients, resulting from wavelet decomposition of said original signal (Ri), that are lower than a predefined threshold value, and reconstructing a signal corresponding to said denoised signal (Si) with an inverse wavelet transformation function of the detail coefficients remaining after thresholding.

4. The method of claim 2 or 3, wherein said decomposition (304) of said residual original signal (RESi) is performed at a level of resolution inferior to the level of resolution used for denoising the original signal (Ri).

5. The method of any one of claims 2 to 4, wherein the wavelet decomposition function used for denoising step (302) is different from the wavelet decomposition function used for residual original signal decomposition (304) step.

6. The method of any one of claims 1 to 5, wherein said original signal (Ri) comprises power level measurement data.

7. The method of any one of claims 1 to 6, wherein said speed estimating (305) step is performed in function of the dispersion of the detail coefficients obtained from said residual original signal wavelet decomposition (304).

8. The method of any one of claims 1 to 7, wherein said speed estimating (305) step includes:
- for each of a plurality of preset values intervals, counting the detail coefficients whose values are included in said values interval so as to obtain the distribution of said detail coefficients,
- applying to said distribution of detail coefficients, conditional tests to estimate speed, or speed class, related to the user mobile communication device.

9. The method of any one of claims 1 to 8, wherein said estimating (305) step includes building a database (DB) with the steps of :
for each of a plurality of signals, named reference signals, exchanged between user mobile communication device(s) and at least one wireless access point, said user mobile communication device(s) moving at different known speeds,
denoising said reference signal in the same way as said original signal and generating a residual reference signal by subtracting denoised reference signal from said reference signal, said residual reference signal being decomposed in detail coefficients with the same wavelet decomposition function as the one to be used for decomposing said residual original signal, and
for each of a plurality of preset values intervals, counting the detail coefficients whose values are included in said values interval so as to obtain, for each reference signal to which a known speed, or speed class, is attached, the distribution, named reference distribution, of said detail coefficients of said reference signal.

10. The method of claim 9, wherein said speed estimating (305) step includes:
- comparing the distribution of the detail coefficients derived from the wavelet decomposition of the residual original signal, with the reference distributions of detail coefficients included in the reference database (DB),
- determining the distribution(s) of detail coefficients included in the reference database (DB) that is or are the most similar to the distribution of detail coefficients derived from the wavelet decomposition of the residual original signal, and
- associating the known speed, or class speed, of said determined reference distribution(s) to the user mobile communication device whose speed, or class speed, has to be estimated.

11. A system for estimating speed, or speed class, of a user mobile communication device in a wireless communication network, said system comprising :
- means for acquiring (301) a signal, named original signal (Ri), exchanged between said user mobile communication device and a wireless access point of the wireless communication network,
- means for denoising (302) said original signal (Ri) for smoothing the original signal by deleting the fast fading component of said original signal (Ri) to generate a denoised signal (Si);
- means for subtracting (303) said denoised signal (Si) from said original signal (Ri) to generate a residual original signal (RESi),
- means for decomposing (304) of said residual original signal (RESi) with a wavelet decomposition function,
- means for estimating (305) said speed, or speed class, of the user mobile communication device in function of the result of said residual original signal wavelet decomposition.

12. The system of claim 11, wherein means for denoising (302) include means for decomposing of said original signal (Ri) with a wavelet decomposition function.

13. The system of claim 12, wherein said denoising (302) step also includes omitting the detail coefficients, resulting from wavelet decomposition of said original signal (Ri), that are lower than a predefined threshold value, and reconstructing a signal corresponding to said denoised signal (Si) with an inverse wavelet transformation function of the detail coefficients remaining after thresholding.

14. The system of claim 12 or 13, wherein means for decomposing (304) said residual original signal (RESi) are configured to perform decomposition at a level of resolution inferior to the level of resolution used by means for denoising the original signal (Ri).

15. The system of any one of claims 12 to 14, wherein the wavelet decomposition function used by means for denoising (302) is different from the wavelet decomposition function used by means for decomposing (304) the residual original signal.
